Europäisches Patentamt

European Patent Office

Office européen des brevets

(19)

(11) Veröffentlichungsnummer: **0 413 155 A2**

# (12) EUROPÄISCHE PATENTANMELDUNG

(21) Anmeldenummer: 90113733.1

(22) Anmeldetag: 18.07.90

(51) Int. Cl.5: **B02C 23/22**, B02C 23/02

(30) Priorität: 16.08.89 DE 3926882

(43) Veröffentlichungstag der Anmeldung:
20.02.91 Patentblatt 91/08

(84) Benannte Vertragsstaaten:
**DE DK ES FR GB IT**

(71) Anmelder: **Klöckner-Humboldt-Deutz Aktiengesellschaft**
**Deutz-Mülheimer-Strasse 111 Postfach 80 05 09**
**D-5000 Köln 80(DE)**

(72) Erfinder: **Strasser, Siegfried**
**Gerlinghausen 69**
**D-5203 Much(DE)**
Erfinder: **Göddecke, Franz**
**Am Sonnenhang 29**
**D-5090 Leverkusen 3(DE)**
Erfinder: **Wolter, Albrecht, Dr.**
**Venloer Strasse 24**
**D-5000 Köln 1(DE)**

(54) Kreislaufmahlanlage zur Mahlung von Sprödem Gut.

(57) Um bei einer Kreislaufmahlanlage zur Mahlung von sprödem Gut zur Herstellung von z. B. Zement, umfassend eine mit hoher Preßkraft betriebene Hochdruck-Walzenpresse mit Gutbettzerkleinerung des Gutes und einen der Walzenpresse nachgeschalteten Desagglomerator/Sichter, dessen Grobgutaustrag (Grieße) wenigstens zum Teil zum Gutaufgabeschacht der Walzenpresse rezirkuliert wird, zu erreichen, daß die gesamte Kreislaufmahlanlage in ihrer Bauhöhe niedrig bleibt und nur einen geringen Raumbedarf sowie geringen maschinellen Aufwand erforderlich macht, wird erfindungsgemäß vorgeschlagen, daß der Sichter (17) unmittelbar oberhalb des Walzenspaltes der Walzenpresse (10) aufgebaut ist und daß das Unterteil des Sichters (17) als der Gutaufgabeschacht (14, 14a, 14b) mit Aufgabe des frischen Mahlgutes (11) und der Sichtergrieße (25) zum Walzenspalt ausgebildet ist.

EP 0 413 155 A2

## KREISLAUFMAHLANLAGE ZUR MAHLUNG VON SPRÖDEM GUT

Die Erfindung betrifft eine Kreislaufmahlanlage zur Mahlung von sprödem Gut, enthaltend eine mit hoher Preßkraft betriebene Hochdruck-Walzenpresse mit oberhalb des Walzenspaltes angeordnetem Gutaufgabeschacht und mit einem Sichter, dessen Grobgutaustrag (Grieße) wenigstens zum Teil zum Gutaufgabeschacht rezirkuliert wird.

Bei einer bekannten Kreislaufmahlung spröden Mahlgutes (EP-PS 0 084 383) wird das frische Mahlgut, z. B. nicht vorzerkleinerter Zementklinker, im Walzenspalt einer Hochdruck-Walzenpresse unter hohem Druck gepreßt, was teils zur Partikelzerstörung, teils zur Erzeugung von An rissen im Partikelinneren führt und sich sichtbar in der Bildung von Agglomeraten (sogenannten Schülpen) äußert, die sich mit vergleichsweise geringem Energieaufwand desagglomerieren bzw. auflösen lassen und die infolge der Anwendung des hohen Preßdruckes unter Zerstörung des Korngefüges bereits fertig feines Gut enthalten, so daß die bekannte Zerkleinerung insgesamt durch einen niedrigen spezifischen Energiebedarf gekennzeichnet ist. Die einzelnen Partikel des durch Reibung in den Walzenspalt der Walzenpresse eingezogenen Mahlgutes werden in einem Gutbett, d. h. in einer zwischen den beiden Walzenoberflächen zusammengedrückten Materialschüttung bei Anwendung des extrem hohen Druckes gegenseitig zerquetscht, so daß man hierbei von der sogenannten Gutbettzerkleinerung spricht. Der Hochdruck-Walzenpresse ist ein Sichter nachgeschaltet, der das fertig feine Fertiggut aus den desagglomerierten Schülpen des Walzenpressenaustrages heraussichtet und dessen Grobgutaustrag (Grieße) zur Walzenpresse rezirkuliert wird. Der Walzenpresse wird also das frische Mahlgut zusammen mit den rezirkulierten Sichtergrießen aufgegeben, und zwar über einen oberhalb des Walzenspaltes angeordneten Gutaufgabeschacht, der schon aus Gründen des kontinuierlichen Pressenbetriebes relativ hoch gebaut sein muß.

Bei praktisch realisierten Kreislaufmahlanlagen der eingangs genannten Art werden die die Walzenpresse verlassenden Schülpen gegebenenfalls nach ihrer Desagglomeration mittels eines Steilförderers, z. B. Becherwerk, nach oben gefördert zu einem weit oberhalb der Walzenpresse angeordneten Sichter, dessen Grießeaustragsleitung nach unten zum Gutaufgabeschacht der Walzenpresse führt. Es versteht sich, daß die bekannten Kreislaufmahlanlagen infolge Anordnung der einzelnen Aggregate insgesamt eine große Bauhöhe erfordern, die aber nicht immer zur Verfügung steht, insbesondere nicht bei Umbau- bzw. Modernisierungsmaßnahmen an bestehenden Umlaufmahlanlagen infolge der Einführung der energiesparenden Gutbettzerkleinerung.

Der Erfindung liegt die Aufgabe zugrunde, eine Kreislaufmahlanlage der eingangs genannten Art zu schaffen, die mit einer vergleichsweise niedrigen Bauhöhe und mit möglichst geringem maschinellen Aufwand auskommt.

Diese Aufgabe wird gemäß der Erfindung mit den Maßnahmen des Kennzeichnungsteils des Anspruchs 1 gelöst.

Charakteristisch für die erfindungsgemäße Kreislaufmahlanlage ist, daß cer Sichter nicht wie bisher üblich oberhalb des Gutaufgabeschachtes der Hochdruck-Walzenpresse angeordnet ist, sondern daß der Sichter unmittelbar oberhalb des Walzenspaltes der Walzenpresse aufgebaut und das Unterteil des Sichters selbst als der Gutaufgabeschacht der Walzenpresse mit Aufgabe sowohl des frischen Mahlgutes als auch der Sichtergrieße zum Walzenspalt ausgebildet ist. Dazu mündet in den nach unten führenden Grießeaustragsbehälter des Sichters am zweckmäßigsten seitlich quer zum Walzenspalt ein Zuführungsorgan, z. B. Druckschnecke, zur Einführung des frischen Mahlgutes ein, welches dann zusammen mit den Sichtergrießen dem Walzenspalt der Walzenpresse zugeführt wird. Auf diese Weise sind der Gutaufgabeschacht der Walzenpresse und der Sichter zu einer einzigen Baueinheit vereinigt, wodurch sich eine insgesamt vergleichsweise niedrige Bauhöhe der Gesamtanlage sowie vergleichsweise kurze Förderorgane bei geringstem maschinellen Aufwand unter Einsparung von Investitions- und Betriebskosten erzielen lassen.

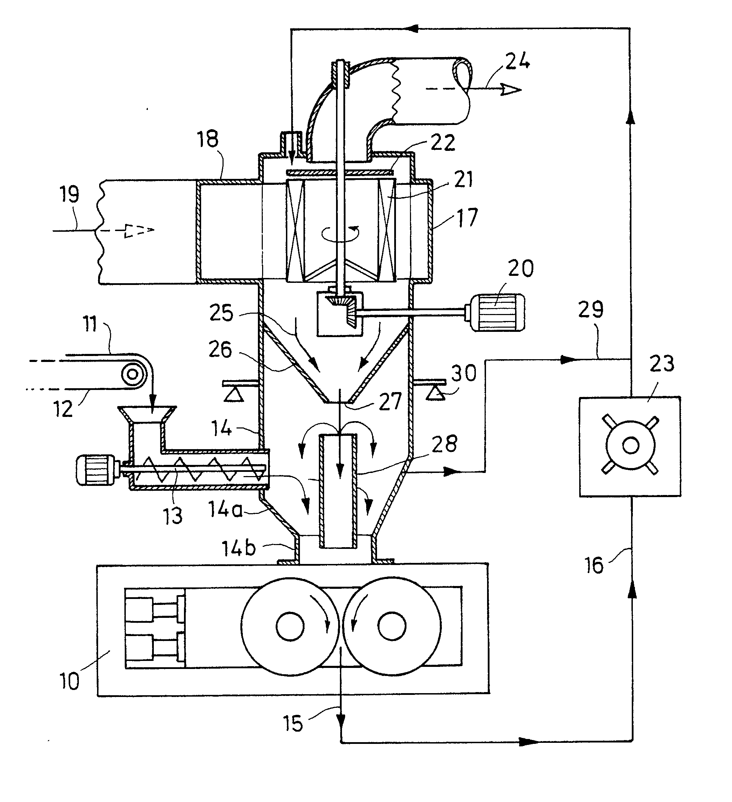

Die Erfindung und deren weitere Merkmale und Vorteile werden anhand des in der Zeichnung schematisch dargestellten Ausführungsbeispieles näher erläutert.

Die Zeichnung zeigt schematisch das Fließbild einer Kreislaufmahlanlage zur Herstellung von z. B. Zement. Die erste Stufe der Kreislaufmahlung besteht aus einer Hochdruck-Walzenpresse (10), auf deren Walzenspalt das zu zerkleinernde bzw. zu mahlende frische Aufgabegut (11), z. B. Zementklinker und Gips über Förderorgan (12), Druckschnecke (13) und Gutaufgabeschacht (14) aufgegeben wird. Die Korngröße eines wesentlichen Teils des Aufgabeguts kann größer sein als die Weite des engsten Walzenspaltes von z. B. 20 mm zwischen den beiden Preßwalzen, die einen Durchmesser von beispielsweise 900 mm haben können. Die auf das Gut drückende Preßkraft der Walzen der Walzenpresse (10) beträgt mehr als 2 MN/m Walzenlänge, beipielsweise 6 bis 9 MN/m. Das frische Aufgabegut (11) wird im Spalt zwischen den Walzen durch eine kombinierte Einzelkornzerkleinerung und Gutbettzerkleinerung zerkleinert.

Bei der Gutbettzerkleinerung drückt das zwischen die Walzen eingezogene Gut die Walzen auseinander und die Teilchen des Aufgabegutes zerquetschen sich im Walzenspalt in einer Schüttung bzw. in einem Gutbett gegenseitig. Die beiden Komponenten Zementklinker und Gips treten aus dem Walzenspalt zerkleinert unc teilweise agglomeriert, d. h. zu Schülpen (15) verpreßt aus, deren Anteil an bereits bis zur gewünschten Zementfeinheit reduzierten Partikeln (z. B. etwa 25 % kleiner 90 um) relativ hoch sein kann.

Die Schülpen (15) werden über einen Förderer (16), z. B. Becherwerk zum Guteintrag eines Sichters (17) transportiert, in den über ein Spiralgehäuse (18) Sichtluft (19) einströmt. Im Sichter (17) ist ein von einem Motor (20) angetriebener rotierbarer Stabkorb (21) mit Turboelementen sowie ein rotierender Streuteller (22) für das Sichteraufgabegut angeordnet, der gleichzeitig als Desagglomerator zur Desagglomerierung der Schülpenbruchstücke (15) sowie auch als Prallzerkleinerer ausgebildet sein kann. Es besteht auch die Möglichkeit, dem Sichter (17) einen externen Desagglomerator/Zerkleinerer (23) vorzuschalten. Aus dem Sichter (17) wird die Sichtluft (24) beladen mit Fertiggut (fertig feiner Zement) abgezogen und zu einem nicht dargestellten Abscheider transportiert, in welchem das Fertiggut von der Sichtluft abgetrennt wird. Ein Teilstrom des den Sichter (17) verlassenden Sichtluftstromes (24) kann zur einströmenden Sichtluft (19) rezirkuliert werden.

Die Grobkornfraktion (Grieße) (25) des Sichters (17) werden über ein zum Zentrum förderndes Konusteil (26) nach unten zu einer Austragsöffnung (27) gefördert. Das Konusteil (26) ist innerhalb des Grießeaustragsbehälters (14) angeordnet, mit dem über ein im Querschnitt verjüngendes Adapterteil (14a) sowie über ein Schachtstück (14b) rechteckigen Querschnittes der Sichter (17) unmittelbar oberhalb des Walzenspaltes der Walzenpresse (10) aufgebaut ist. Unterhalb der Austragsöffnung (27) des Konusteils (26) ist innerhalb des Grießeaustragsbehälters (14) ein die Sichtergrieße im Gutaufgabeschacht vertei lendes Verteilerorgan (28) angeordnet, welches dafür sorgt, die Sichtergrieße (25) im zugeführten frischen Mahlgut (11) zu verteilen.

Es besteht die Möglichkeit, die Gutfüllstandshöhe im Grießeaustragsbehälter (14), der ja zusammen mit den Teilen (14a und 14b) gleichzeitig den Gutaufgabeschacht für die Walzenpressen (10) bildet, zu messen und immer auf konstante Höhe oder innerhalb zugelassener Grenzwerte zu regeln, indem in Abhängigkeit der Gutfüllstandshöhe ein Regeleingriff auf die Zufuhrmenge des frischen Mahlgutes (11) und/oder ein Regeleingriff auf den gegebenenfalls angeordneten Grießeüberlauf (29) erfolgt, der mit der Schülpenrezirkulierung (15, 16) in Verbindung steht. Zum Zwecke einer einfachen Gutfüllstandshöhen-bzw. mengenmessung kann der Grießeaustragsbehälter (14) und damit der gesamte Sichter (17) gewogen werden, indem diese Teile z. B. auf Druckmeßdosen (30) gelagert sind.

Der Querschnitt des Grießeaustragsbehälters (14) kann rund oder auch rechteckig bzw. quadratisch sein. Jedenfalls mündet die Druckschnecke (13) zur Zuführung des frischen Mahlgutes (11) seitlich quer zum Walzenspalt der Walzenpresse (10) in den Gutaufgabeschacht der Walzenpresse ein.

Die Erfindung erlaubt mit geringem Maschinenaufwand den Bau kompakter Kreislaufmahlanlagen mit Einsatz der energiesparenden Gutbettzerkleinerungs-Walzenpresse sowie die einfache Modernisierung bestehender Altanlagen mit geringfügigem Umbau eines vorhandenen Sichters zwecks Integrierung der energiesparenden Hochdruck-Walzenpreßtechnik.

**Ansprüche**

1. Kreislaufmahlanlage zur Mahlung von sprödem Gut, enthaltend eine mit hoher Preßkraft betriebene Hochdruck-Walzenpresse mit oberhalb des Walzenspaltes angeordnetem Gutaufgabeschacht und mit einem Sichter, dessen Grobgutaustrag (Grieße) wenigstens zum Teil zum Gutaufgabeschacht rezirkuliert ist, dadurch gekennzeichnet , daß der Sichter (17) unmittelbar oberhalb des Walzenspaltes der Walzenpresse (10) aufgebaut ist und daß das Unterteil des Sichters (17) als der Gutaufgabeschacht (14, 14a, 14b) mit Aufgabe des frischen Mahlgutes (11) und der Sichtergrieße (25) zum Walzenspalt ausgebildet ist.

2. Mahlanlage nach Anspruch 1, dadurch gekennzeichnet , daß der Sichter (17) ein dynamischer Sichter ist mit einem Gehäuse mit seitlichem Sichtlufteintritt (19) und mit an der Oberseite angeordnetem Sichtluft-und Feingutaustritt (24) und mit einem an der Unterseite angeordneten Grießeaustragsbehälter (14), in den ein Zuführungsorgan (13) für das frische Mahlgut (11) einmündet.

3. Mahlanlage nach Anspruch 2, dadurch gekennzeichnet , daß sich an den Grießeaustragsbehälter (14) nach unten über eine Querschnittsverjüngung (14a) ein im Querschnitt rechteckiges, unmittelbar oberhalb des Walzenspaltes angeordnetes Schachtstück (14b) des Gutaufgabeschachtes (14, 14a, 14b) anschließt.

4. Mahlanlage nach Anspruch 2, dadurch gekennzeichnet , daß innerhalb des Grießeaustragsbehälters (14) ein die Grieße (25) zum Zentrum förderndes Konusteil (26) angeordnet ist, unterhalb dessen Austragsöffnung (27) ein die Sichtergrieße im Gutaufgabeschacht verteilendes Verteilerorgan (28) angeordnet ist.